# EUROPÄISCHE PATENTANMELDUNG

(11) **EP 0 980 907 A1**
(43) Veröffentlichungstag der Anmeldung: **23.02.2000**
(21) Anmeldenummer: 99115364.4
(22) Anmeldetag: 04.08.1999
(51) Int. Cl.: C09K 19/00, C09K 19/38, B41M 5/26, C09D 5/36

(54) **Lasermarkierung von Effektbeschichtungen**

(30) Priorität: 14.08.1998 DE 19836885
(71) Anmelder: Clariant GmbH, 65929 Frankfurt am Main (DE)
(72) Erfinder: Schönfeld, Axel, Dr., 65207 Wiesbaden (DE); Stohr, Andreas, Dr., 65830 Kriftel (DE); Metz, Hans Joachim, Dr., 64285 Darmstadt (DE)

(57) **Zusammenfassung**

Die Erfindung betrifft ein Verfahren zur Erzeugung einer Markierung auf einer Effektbeschichtung oder Formmasse aus cholesterischen flüssigkristallinen Hauptketten- oder Seitengruppenpolymeren oder aus einer Kombination aus Hauptketten- und Seitengruppenpolymeren, dadurch gekennzeichnet, daß durch Laserbestrahlung eine Farbänderung auf den bestrahlten Stellen der Effektbeschichtung oder Formmasse hervorgerufen wird.

## Beschreibung

Die Erfindung betrifft ein Verfahren zur Herstellung von Zeichen auf Effektbeschichtungen oder Formmassen aus thermoplastischen cholesterischen Flüssigkristallpolymeren (cLCPs) mit optisch variablen Eigenschaften durch Laserbestrahlung.

Es ist bekannt, Kunststoffoberflächen mittels Laserstrahlung zu beschriften, wobei neben CO₂-Lasern vorzugsweise Nd:YAG-Laser (Wellenlänge 1064 nm) oder ein fequenzverdoppelter Nd:YAG-Laser (532 nm) Verwendung finden.
Bei heute üblichen Lasermarkierungen ist der Markierungsmechanismus gewöhnlich ein thermischer Prozeß (N. J. Bruton, Opt. Photonics News (1997), 8(5), 24-30). Durch das absorbierte Laserlicht wird in dem Polymermaterial an den bestrahlten Stellen ein schneller lokaler Temperaturanstieg hervorgerufen. Das Polymermaterial pyrolysiert und eine Markierung wird sichtbar. Bei Polymeren, die für die verwendete Lichtwellenlänge durchlässig sind, ist die Verwendung von lichtabsorbierenden Zusätzen notwendig, wie z.B. Kaolin.

Anfangs waren nur helle Schriften auf dunklem Untergrund oder dunkle Schriften auf hellem Untergrund möglich. Durch Einarbeiten von farbigen Pigmenten, die durch die Laserbestrahlung nicht zerstört werden, ist es möglich, farbige Lasermarkierungen zu erzeugen (EP 0 641 821 A1).

So zeichnen sich die bisher bekannten Lasermarkierungen dadurch aus, daß sie auf einem weißen oder gefärbten Polymer eine Markierung in einer davon verschiedenen Farbe besitzen. Weder die Farbe des Kunststoffes noch die der Beschriftung weisen jedoch eine Blickwinkelabhängigkeit auf.

Cholesterische Hauptkettenpolymere (cLCP) sind bekannt und können analog nematischer Hauptkettenpolymere hergestellt werden, indem ein zusätzliches chirales Comonomer verwendet wird (US-A-4,412,059; EP-A-0 196 785; EP-A-0 608 991; EP-A-0 391 368) oder indem nematische Hauptkettenpolymere (LCP) mit zusätzlichen chiralen Comonomeren umgesetzt werden (EP-A-0 283 273). Cholesterische Hauptkettenpolymere zeichnen sich durch ihre helikale Überstruktur aus. Diese führt zum einen dazu, daß das Material nicht mehr die bei nematischen Flüssigkristallpolymeren übliche Anisotropie der mechanischen Eigenschaften aufweist. Je nach Gehalt an chiralem Monomer zeigt das Material ausgeprägte Farbeffekte, die auf der selektiven Reflexion an der helikalen Überstruktur beruhen. Die genaue Reflexionsfarbe hängt hierbei vom Betrachtungswinkel und vor allem von der Ganghöhe der Helix ab. Für jeden beliebigen Betrachtungswinkel - zum Beispiel senkrechte Aufsicht auf einen Probekörper - erscheint als Reflexionsfarbe eine Farbe mit einer Wellenlänge, die der Ganghöhe der helikalen Überstruktur entspricht. Dies bedeutet, daß das reflektierte Licht eine um so kürzere Wellenlänge hat, je kleiner die Ganghöhe der Helix ist. Die sich ausbildende Ganghöhe der Helix hängt im wesentlichen von dem Anteil des chiralen Comonomers, der Art des Einbaus in das Polymer, des Polymerisationsgrads und der Struktur des chiralen Comonomers ab.

Dünne Schichten cholesterischer Flüssigkristalle zeigen ausgeprägte Farbeffekte, wenn sie auf einem absorbierenden, insbesondere schwarzen Untergrund aufgebracht sind, da ansonsten aufgrund eines nicht hinreichend ausgeprägten Deckvermögens der cholesterischen Flüssigkristalle der nicht selektive Teil des Lichts am Untergrund reflektiert wird, was den Farbeindruck schwächt. Es ist ferner bekannt, daß anstelle eines schwarzen Untergrunds auch anders eingefärbte Untergründe verwendet werden können. Weiterhin ist es möglich, das Deckvermögen und den Farbeindruck der cholesterischen Schicht durch Einarbeiten von Farbmitteln zu beeinflussen (DE-A-196 43 277).

Aufgabe der vorliegenden Erfindung ist es, in vom Betrachtungswinkel abhängigen Effektbeschichtungen oder Formmassen Farbänderungen durch Laserbestrahlung und somit Markierungen in Form von Zeichen herbeizuführen, die bei geeigneter Farbwahl sogar nur unter bestimmten Blickwinkeln erkennbar sind.

Es wurde überraschenderweise gefunden, daß die Aufgabe durch die Verwendung von cholesterischen flüssigkristallinen Polymeren gelöst werden kann. Vorteil gegenüber heute gängigen Systemen ist, daß das zu markierende Effektpolymer durch seine Reflexionseigenschaften eine blickwinkelabhängige Farbe aufweist und somit nicht nur farbige Markierungen auf Polymeren möglich sind, sondern daß durch die Lasermarkierung eine Farbänderung in einer blickwinkelabhängigen Beschichtung herbeigeführt werden kann.

Gegenstand der vorliegenden Erfindung ist ein Verfahren zur Erzeugung einer Markierung auf einer Effektbeschichtung oder Formmasse aus cholesterischen flüssigkristallinen Hauptketten- oder Seitengruppenpolymeren oder aus einer Kombination aus Hauptketten- und Seitengruppenpolymeren, dadurch gekennzeichnet, daß durch Laserbestrahlung eine Farbänderung auf den bestrahlten Stellen der Effektbeschichtung oder Formmasse hervorgerufen wird.

Wird eine dünne Schicht der erwähnten cholesterischen Flüssigkristallpolymere, die auf einem Substrat aufgebracht ist, mit einem Laser bestrahlt, so wird die Cholesterische Anordnung der Flüssigkristallpolymere an den bestrahlten Stellen zerstört und die Substratoberfläche wird je nach Bestrahlungsdauer und -intensität mehr oder weniger sichtbar. Ist die Substratoberfläche farbig, entweder massiv eingefärbt oder durch eine farbige Beschichtung, wird die Substratfarbe sichtbar und als Markierung erkennbar. So kann man z.B. durch Laserbestrahlung einer bei senkrechtem Anblick grün und bei schrägem Anblick blau erscheinenden Effektbeschichtung, die auf einem schwarz beschichteten Metallblech aufgebracht wurde, eine dunkle Markierung erzeugen. Diese ist somit bei jedem Blickwinkel auf der Effektbeschichtung erkennbar.

Es ist aber auch möglich, die Untergrundfarbe des Substrates an die blickwinkelabhängigen Farben des cholesterischen Polymers anzupassen. Dadurch wird es möglich, daß die Markierung nur unter einem bestimmten Betrachtungswinkel sichtbar wird. Ist die Effektbeschichtung z.B. derart, daß sie bei senkrechter Betrachtung grün und bei schräger Betrachtung blau erscheint, so kann die Untergrundfarbe grün oder blau gewählt werden. Ist die Untergrundfarbe grün, dann ist die mit dem Laser markierte Stelle ebenfalls grün und die Markierung ist bei senkrechter Betrachtung wegen des fehlenden Kontrastes nur schwer erkennbar. Betrachtet man die Beschichtung jedoch unter einem schrägen Winkel, erscheint die Farbe der Effektbeschichtung blau, die lasermarkierte Stelle bleibt grün und wird somit sichtbar.

Will man, daß die Markierung bei senkrechter Betrachtung sichtbar ist, jedoch bei schräger Ansicht nicht, muß in dem genannten Beispiel als Untergrundfarbe blau gewählt werden.

Wird eine Formmasse aus den genannten cLCPs mit dem Laser markiert, so entsteht je nach Bestrahlungsdauer und -intensität an den bestrahlten Stellen der Farbeindruck des nicht-orientierten Polymers, d.h., milchig-trüb im Falle eines nicht mit nachstehenden Farbmitteln eingefärbten Polymers, oder eine graue oder schwarze Markierung, hervorgerufen durch Pyrolyseprodukte.

Die Farbe der Lasermarkierung kann nicht nur durch die Farbe des Untergrundes beeinflußt werden, sondern auch durch Einmischen von Farbmitteln in das Effektpolymer, die gegenüber der Lasermarkierung stabil sind.
In ein z.B. von grün nach blau floppendes Effektpolymer kann z.B.ein rotes Pigment eingearbeitet werden. Die Effektbeschichtung oder Formmasse wird mit einem Laser bestrahlt, bis an der bestrahlten Stelle die Farbe des Farbmittels sichtbar wird.

Als Farbmittel können Verbindungen aus der Reihe der anorganischen und organischen Pigmente sowie der polymerlöslichen Farbstoffe verwendet werden. Als anorganische Pigmente seien beispielsweise genannt: Titandioxid, Eisenoxide, Metalloxid-Mischphasenpigmente, Cadmiumsulfide, Ultramarinblau- oder Chromat-Molybdat-Pigmente. Als organische Pigmente können alle dem Fachmann aus der einschlägigen Literatur hinlänglich bekannten Pigmente eingesetzt werden, z.B. Ruß-, Anthanthron-, Dioxazin-, Phthalocyanin-, Chinacridon, Diketopyrrolopyrrol-, Perylen-, Perinon-, Azomethin-, Isoindolin- oder Azopigmente. Geeignete Farbstoffe sind beispielsweise Chinophthalon-, Perinon-, Anthrachinon-, Azomethinkomplex-, Azlacton- und Azofarbstoffe. Die Farbstoffe können im cholesterischen Flüssigkristallpolymer vollständig oder teilweise gelöst sein.

Um spezielle coloristische Effekte zu erzielen, können als Farbmittel auch Mischungen verschiedener Pigmente oder Farbstoffe oder Mischungen von Farbstoffen mit Pigmenten eingesetzt werden.

Die erfindungsgemäß eingesetzte Strahlung wird im allgemeinen mit Hilfe eines kommerziell erhältlichen Lasers erzeugt. Die Wellenlänge der Strahlung liegt im allgemeinen im Bereich zwischen 150 und 1500 nm, vorzugsweise im Bereich von 150 bis 1100 nm. Vorzugsweise eignen sich CO₂-Laser, Nd:YAG-Laser, frequenzverdreifachte Nd:YAG-Laser (355 nm Wellenlänge), frequenzvervierfachte Nd:YAG-Laser (266 nm Wellenlänge) oder UV Laser. Als UV Laser eignen sich besonders Excimerlaser, wie beispielsweise F₂-Excimerlaser (157 nm Wellenlänge), ArF-Excimerlaser (193 nm Wellenlänge), KrCl- Excimerlaser (222 nm Wellenlänge), KrF-Excimerlaser (248 nm Wellenlänge), XeCl-Excimerlaser (308 nm Wellenlänge) sowie XeF-Excimerlaser (351 nm Wellenlänge).

Besonders bevorzugt sind Nd:YAG-Laser (532 bzw. 1064 nm Wellenlänge), KrF-Laser (248 nm Wellenlänge) sowie XeCl-Laser (308 nm Wellenlänge).
Im Falle der Verwendung von gepulsten Lasern eignen sich Pulsfrequenzen zwischen 0,1 und 10000 Hz, vorzugsweise zwischen 0,5 und 5000 Hz und insbesondere zwischen 1 und 1000 Hz. Die Pulslängen liegen im Bereich von 0,1 bis 1000 ns, vorzugsweise im Bereich von 0,5 bis 350 ns und insbesondere im Bereich von 1 bis 100 ns.

Die Laser weisen in der Regel eine Energiedichte zwischen 0,3 mJ/cm² und 50 J/cm², vorzugsweise zwischen 0,5 mJ/cm² und 20 J/cm² und insbesondere zwischen 1 mJ/cm² und 10 J/cm², auf.

Die Strahlungsdauer liegt je nach verwendetem Laser und Laserenergie zwischen 1 Millisekunde und 30 Sekunden.

Die erfindungsgemäß einsetzbaren thermoplastischen cholesterischen Polymere umfassen sowohl cholesterische flüssigkristalline Hauptkettenpolymere, cholesterische flüssigkristalline Seitengruppenpolymere als auch kombinierte flüssigkristalline Hauptketten-/Seitengruppenpolymere.

Cholesterische flüssigkristalline Seitengruppenpolymere sind beispielsweise Polysiloxane, cyclische Siloxane, Polyacrylate oder Polymethacrylate mit Mesogenen in den Seitengruppen. Die Mesogene in der Seitengruppe sind beispielsweise mit Cholesterin substituierte Phenylbenzoate oder Biphenole.

Die Hauptkettenpolymere sind vorzugsweise flüssigkristalline Polyester, Polyamide oder Polyesteramide, die aromatische und/oder cycloaliphatische Hydroxycarbonsäuren, aromatische Aminocarbonsäuren; und/oder aromatische und/oder cycloaliphatische Dicarbonsäuren, und aromatische und/oder cycloaliphatische Diole und/oder Diamine; sowie chirale, bifunktionelle Comonomere enthalten.

Cholesterische flüssigkristalline Hauptkettenpolymere werden im allgemeinen aus einer chiralen Komponente sowie aus Hydroxycarbonsäuren und/oder einer Kombination aus Dicarbonsäuren und Diolen hergestellt. In der Regel bestehen die Polymere im wesentlichen aus aromatischen Bestandteilen. Es ist jedoch auch möglich, aliphatische und cycloaliphatische Komponenten, wie beispielsweise Cyclohexandicarbonsäure, einzusetzen.

Bevorzugte cholesterische Polymere im Sinne der vorliegenden Erfindung sind cholesterische flüssigkristalline Hauptkettenpolymere, bestehend im wesentlichen aus
a) 0 bis 99,8 Mol% einer oder mehrerer Verbindungen aus der Gruppe der aromatischen Hydroxycarbonsäuren, cycloaliphatischen Hydroxycarbonsäuren und aromatischen Aminocarbonsäuren;
b) 0 bis 50 Mol% einer oder mehrerer Verbindungen aus der Gruppe der aromatischen Dicarbonsäuren und cycloaliphatischen Dicarbonsäuren;
c) 0 bis 50 Mol% einer oder mehrerer Verbindungen aus der Gruppe der aromatischen und cycloaliphatischen Diole und Diamine;
d) 0,1 bis 40 Mol%, vorzugsweise 1 bis 25 Mol%, an chiralen, bifunktionellen Comonomeren; wobei die Gesamtsumme 100 Mol% ergibt und die Summe aus a), b) und c) 60 bis 99,9 Mol% beträgt.

Bei den angegebenen Prozentsätzen ist darauf zu achten) daß die dem Fachmann bekannte Stöchiometrie der funktionellen Gruppen zur Polykondensation gewährleistet ist. Zusätzlich können die Polymere noch Komponenten mit nur einer funktionellen Gruppe oder mit mehr als zwei funktionellen Gruppen, wie beispielsweise Dihydroxybenzoesäure, Trihydroxybenzole oder Trimellitsäure enthalten. Auf diese Weise kann Einfluß auf das Molekulargewicht der Polymeren genommen werden. Die Komponenten mit mehr als zwei funktionellen Gruppen wirken als Verzweigungsstelle im Polymer und dürfen nur in geringen Konzentrationen, beispielsweise 0 bis 5 Mol%, zugegeben werden, wenn eine Vernetzung des Materials während der Kondensation vermieden werden soll.

Besonders bevorzugt sind cholesterische Hauptkettenpolymere, die aus folgenden Bausteinen der einzelnen Monomergruppen aufgebaut sind:
a) Aromatische Hydroxycarbonsäuren, Aminocarbonsäuren:
   Hydroxybenzoesäuren, Hydroxynaphthalincarbonsäuren, Hydroxybiphenylcarbonsäuren, Aminobenzoesäuren, Hydroxyzimtsäuren
b) Aromatische Dicarbonsäuren, aliphatische Dicarbonsäuren:
   Terephthalsäure, Isophthalsäure, Biphenyldicarbonsäuren, Naphthalindicarbonsäuren, Cyclohexandicarbonsäuren, Pyridindicarbonsäuren, Diphenyletherdicarbonsäuren, Carboxyzimtsäuren, 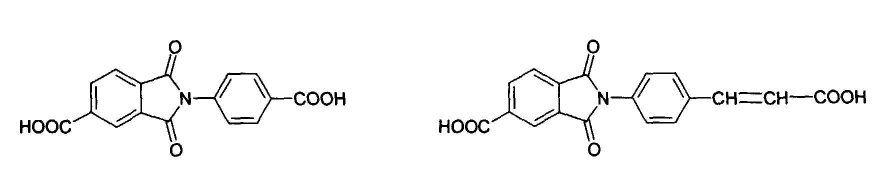
c) Aromatische Diole, Aminophenole, Diamine:
   Hydrochinone, Dihydroxybiphenyle, Tetramethyldihydroxybiphenyle, Naphthalindiole, Dihydroxydiphenylsulfone, Dihydroxydiphenylether, Dihydroxyterphenyle, Dihydroxydiphenylketone, Phenylendiamine, Diaminoanthrachinone, Dihydroxyanthrachinone sowie 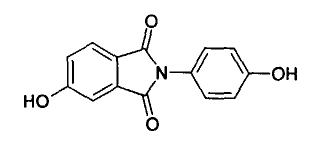
d) Chirale, bifunktionelle Monomere:
   Isosorbid, Isomannid, Isoidid, Camphersäure, (D)- oder (L)- Methylpiperazin, (D)- oder (L)- 3-Methyladipinsäure, Butan-2,3-diol sowie 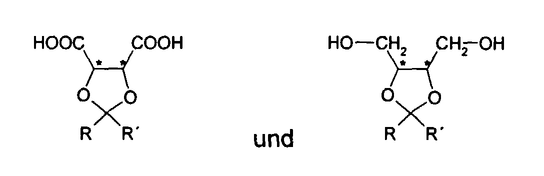 wobei R und R 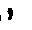 jeweils unabhängig voneinander H, C₁-C₆-Alkyl oder Phenyl, vorzugsweise H oder CH₃, sind.

Bei der Verwendung von Sulfonsäuregruppen als funktionelle Gruppe zur Kondensation kann es vorteilhaft sein, diese in einer aktivierten Form einzusetzen, zum Beispiel als Sulfochlorid oder als Sulfonsäureester.

Anstelle der aufgeführten Substanzen können auch andere Strukturisomere oder Derivate von diesen eingesetzt werden. So ist es beispielsweise möglich, anstelle von N-(4-Hydroxyphenyl-)trimellitimid auch Aminophenol und Trimellitsäureanhydrid einzusetzen.

Die beschriebenen Polymerbausteine können noch weitere Substituenten, wie beispielsweise Methyl, Methoxy, Cyano oder Halogen, enthalten.

Ganz besonders bevorzugt im Sinne der vorliegenden Erfindung sind Polymere, enthaltend ein oder mehrere Monomere aus der Gruppe p-Hydroxybenzoesäure, 2-Hydroxy-6-naphthoesäure, Terephthalsäure, Isophthalsäure, 2,6-Naphthalindicarbonsäure, Hydrochinon, Resorcin und 4,4'-Dihydroxybiphenyl sowie Camphersäure, Isosorbid, Isomannid als chirale Komponente.

Die Polykondensation kann nach allen üblichen Methoden durchgeführt werden. Beispielsweise eignet sich die Schmelzkondensation mit Acetanhydrid, die beispielsweise in EP-A-0 391 368 beschrieben ist. Die Kondensation mit Acetanhydrid ist auch in Lösung oder in disperser oder emulgierter Phase möglich. Bevorzugt erfolgt die Verknüpfung der Monomere über Esterbindungen (Polyester), Amidbindungen (Polyesteramid/Polyamid) und/oder über Imidbindungen (Polyesterimid/Polyimid), jedoch kann die Verknüpfung auch über andere bekannte Verknüpfungsarten erfolgen.

Bei der Auswahl der Monomerbausteine ist darauf zu achten, daß die dem Fachmann bekannte Stöchiometrie der funktionellen Gruppen gewährleistet ist, d. h. daß funktionelle Gruppen, die miteinander in der Polykondensationsreaktion reagieren, in entsprechenden molaren Verhältnissen eingesetzt werden. Beispielsweise bei Verwendung von Dicarbonsäuren und Diolen muß eine der Anzahl an Carboxylgruppen entsprechende Anzahl an Hydroxylgruppen vorhanden sein. Es können jedoch auch gezielte Überschüsse an funktionellen Gruppen, beispielsweise mehr Carboxygruppen als Hydroxygruppen, eingesetzt werden, um so beispielsweise das erzielbare Molekulargewicht zu steuern.

Anstelle der Carbonsäuren können auch Carbonsäurederivate, wie beispielsweise Säurechloride oder Carbonsäureester, eingesetzt werden. Anstelle der Hydroxykomponenten können auch entsprechende Hydroxyderivate, wie beispielsweise die acetylierten Hydroxyverbindungen, eingesetzt werden.

Die cholesterischen flüssigkristallinen Polymere können auch vernetzbare Gruppen enthalten, so daß es möglich ist, ein orientiertes Flüssigkristallpolymer durch beispielsweise eine Photovernetzung zu fixieren.

In einer bevorzugten Ausführungsform weisen die cLCPs eine sehr geringe Löslichkeit auf, so daß ihre Molekulargewichte nicht mit kommerziell üblichen Methoden (GPC, Lichtstreuung) bestimmt werden können. Als Maß für das Molekulargewicht kann die intrinsische Viskosität der Polymere in einer Lösung aus Pentafluorphenol/Hexafluorisopropanol herangezogen werden. Geeignet sind Polymere mit einer intrinsischen Viskosität zwischen 0,1 dl/g und 10 dl/g bei einer Temperatur von 25°C.

Die vorstehend beschriebenen cholesterischen Flüssigkristallpolymere können direkt im Sinne der Erfindung eingesetzt werden. Es ist jedoch auch möglich, Blends aus den cholesterischen flüssigkristallinen Polymeren herzustellen. Die Blends können entweder aus verschiedenen cholesterischen flüssigkristallinen Polymeren bestehen, es ist jedoch auch möglich, die cholesterischen flüssigkristallinen Polymere mit cholesterischen oder nematischen Polymeren zu mischen.

Die Mengenverhältnisse zwischen dem cholesterischen flüssigkristallinen Polymer und den oben beschriebenen Farbmitteln, sofern vorhanden, können in weiten Grenzen schwanken und sind abhängig von der Art des Farbmittels und dem jeweils gewünschten Farbeffekt. Im allgemeinen enthält ein eingefärbtes Polymer 0,1 bis 10 Gew.-% an Farbmittel. Weiterhin können 0 bis 10 Gew.-%, vorzugsweise 0 bis 5 Gew.-%, bezogen auf das Gesamtgewicht, an üblichen Hilfsstoffen und Additiven aus der Gruppe der Verlaufadditive (z.B. Polyacrylate, Polyester, wie sie in Pulverlacksystemen verwendet werden), Stabilisatoren (z.B. UV- oder Wärmestabilisatoren, Antioxidantien), Antistatika und optischen Aufheller in dem cholesterischen Flüssigkristallpolymer enthalten sein.

Farbmittel, Hilfsstoffe und Additive werden mit dem cholesterischen Flüssigkristallpolymer vermischt, bis eine homogene Verteilung vorliegt. Die Vermischung erfolgt am günstigsten in der Schmelze des cholesterischen Flüssigkristallpolymeren. Das Vermischen kann mit allen dafür geeigneten Mischaggregaten, wie beispielsweise Dispersionsknetern, Banburry-Knetern oder Schneckenknetern, oder durch Extrusion, beispielsweise in einem Ein- oder Zweischneckenkneter, erfolgen. Insbesondere bei der Extrusion kann auch von einer pulverförmigen Mischung der Zusatzstoffe mit dem cholesterischen flüssigkristallinen Polymer ausgegangen werden.

Das Farbmittel kann auch direkt während der Herstellung des cholesterischen flüssigkristallinen Polymers, zweckmäßigerweise gegen Ende der Polykondensationsreaktion, vorzugsweise unmittelbar vor dem Austrag des fertigen Polymers, zugegeben werden.

Auch ist es möglich, das Farbmittel in Form eines Masterbatchs in das cholesterische Flüssigkristallpolymer einzuarbeiten. Als Träger für einen Masterbatch können synthetische und natürliche Wachse, Polymere und Kautschuke eingesetzt werden. Bevorzugter Träger für einen Masterbatch ist jedoch das cholesterische Flüssigkristallpolymer selbst. Der Masterbatch kann ein Pigment oder einen Farbstoff oder auch eine Mischung verschiedener Pigmente und/oder Farbstoffe enthalten. Auch können in den Masterbatch weitere Hilfsstoffe und/oder Additive eingearbeitet werden. Die Herstellung solcher Masterbatchs kann nach allen bekannten Verfahren durchgeführt werden, beispielsweise durch inniges Vermischen der Farbmittel mit dem Träger in der Schmelze in geeigneten Mischaggregaten, z.B. Dispersionsknetern, Banburry-Knetern oder Schneckenknetern, z.B. Zweischneckenkneter. Die Einfärbung des cholesterischen flüssigkristallinen Polymers mit dem Masterbatch kann durch Mischen der beiden Materialien und anschließendes Extrudieren erfolgen. Auch kann der Masterbatch als Schmelze in die Schmelze des cholesterischen Flüssigkristallpolymers über einen Seitenextruder und/oder eine Schmelzepumpe zudosiert werden. Am wirtschaftlichsten erfolgt dies beim Austrag des cholesterischen flüssigkristallinen Polymers aus dem Reaktor nach der Polykondensation.

Die nach den vorstehend beschriebenen Verfahren hergestellten eingefärbten flüssigkristallinen Polymere liegen normalerweise als physikalische Mischung aus Farbmittel und Polymer vor. Da bei dem Herstellungsverfahren in der Regel auch bei höheren Temperaturen gearbeitet wird, kann es nicht ausgeschlossen werden, daß im Falle von Farbmitteln mit funktionellen Gruppen wie Carboxyl, Sulfo oder Hydroxyl zumindest teilweise eine chemische Bindung an das cholesterische flüssigkristalline Polymer stattfindet.

Die mit dem erfindungsgemäßen Verfahren hergestellten Lasermarkierungen eignen sich besonders auf solchen Gebieten, wo bisher übliche Druckverfahren zur Beschichtung eingesetzt wurden. Insbesondere eignen sie sich auf dem Gebiet der Sicherheitsbeschriftungen, beispielsweise zur Kennzeichnung von Geldscheinen, Urkunden, Eintrittskarten etc. oder zur Markierung von mit Effektbeschichtungen versehenen Gegenständen.

### Beispiele für cholesterische Flüssigkristallpolymere:

### Beispiel A

30 Mol 2-Hydroxy-6-naphthoesäure, 50 Mol 4-Hydroxy-benzoesäure, 10 Mol Terephthalsäure, 2 Mol 4,4 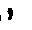 -Dihydroxybiphenyl und 8 Mol 1,4:3,6-Dianhydro-D-sorbit (Isosorbid) werden in einem Reaktor mit 103 Mol Essigsäureanhydrid versetzt und mit einem leichten Stickstoffstrom durchspült. Die Mischung wird unter Rühren innerhalb von 15 Minuten auf 140°C erhitzt und diese Temperatur für 30 Minuten gehalten. Danach wird die Temperatur innerhalb von 165 Minuten auf 325°C erhöht und die Schmelze 30 Minuten bei dieser Temperatur weiter gerührt. Ab ca. 220°C beginnt Essigsäure abzudestillieren. Danach wird die Stickstoffspülung abgebrochen und langsam Vakuum angelegt. Die Schmelze wird für weitere 30 Minuten unter Vakuum (ca. 5 mbar) gerührt. Danach wird mit Stickstoff belüftet und das Polymer mit einem Extruder ausgetragen und pelletiert.
Das Polymer hat eine brillante grüne Farbe, die bei schrägem Anblick blau erscheint. Die Farbe tritt schon während der Kondensation im Vakuum auf und bleibt nach dem Abkühlen erhalten.
Zum Einarbeiten eines blauen Pigmentes wird das Polymer mit 1,5 % C.I.Pigment Blue 15:1 (C.I. Nr. 74 160) 30 Minuten bei 240°C geknetet.

### Beispiel B

17 Mol 2-Hydroxy-6-naphthoesäure, 50 Mol 4-Hydroxy-benzoesäure, 20 Mol 4,4 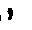 -Dihydroxybiphenyl und 13 Mol Camphersäure werden in einem Reaktor mit 103 Mol Essigsäureanhydrid versetzt und mit einem leichten Stickstoffstrom durchspült. Die Mischung wird unter Rühren innerhalb von 15 Minuten auf 140°C erhitzt und diese Temperatur für 30 Minuten gehalten. Danach wird die Temperatur innerhalb von 165 Minuten auf 325°C erhöht und die Schmelze 30 Minuten bei dieser Temperatur weiter gerührt. Ab ca. 220°C beginnt Essigsäure abzudestillieren. Danach wird die Stickstoffspülung abgebrochen und langsam Vakuum angelegt. Die Schmelze wird für weitere 30 Minuten unter Vakuum (ca. 5 mbar) gerührt. Danach wird mit Stickstoff belüftet und das Polymer mit einem Extruder ausgetragen und pelletiert.
Das Polymer hat eine brillante, rotstichig gelbe Farbe, die bei schrägem Anblick blaustichig grün erscheint. Die Farbe tritt schon während der Kondensation im Vakuum auf und bleibt nach dem Abkühlen erhalten.

### Beispiele zur Herstellung von Markierungen in Effektbeschichtungen:

### Beispiel 1

Als cholesterisches Flüssigkristallpolymer wird das in Beispiel A beschriebene eingefärbte Polymer eingesetzt.
Das cLCP-Granulat wird mit einer Ultrazentrifugalmühle mit 0,1 mm Sieb gemahlen. Anschließend wird das Mahlgut gesichtet, wobei die Sichtereinstellung vorzugsweise so gewählt wird, daß die mittlere Korngröße zwischen 5 und 10 µm liegt.
Mit dem gesichteten Material wird eine 35 gew.-%ige Dispersion in Isobutanol angerührt. Die Dispersion wird mit einem Rakel, dessen Spaltbreite 24 µm beträgt, auf ein schwarz lackiertes Blech aufgezogen. Nach dem Trocknen des Dispersionsauftrages wird das Pulver für 5 Minuten bei 280°C eingebrannt. Der Film zeigt eine grüne Farbe, die bei schrägem Anblick blau erscheint. Die cLCP-Schicht ist sehr gut ausgebildet und homogen.
Auf die Schicht wird mit Hilfe eines Nd:YAG Lasers das Wort 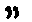 TEST" als Markierung aufgebracht. Durch die Laserbestrahlung pyrolysiert das LCP und die blaue Pigmentfarbe bleibt zurück. Bei senkrechter Betrachtung erscheint die Effektbeschichtung grün und das Wort 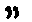 TEST" ist als blauer Schriftzug lesbar. Bei schräger Betrachtung erscheint die Effektbeschichtung blau und das Wort 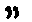 TEST" ist wegen des fehlenden Kontrastes nicht lesbar.

### Beispiel 2:

Als cholesterisches Flüssigkristallpolymer wird das in Beispiel B beschriebene Polymer eingesetzt.
Das cLCP-Granulat wird mit einer Ultrazentrifugalmühle mit 0,1 mm Sieb gemahlen. Anschließend wird das Mahlgut gesichtet, wobei die Sichtereinstellung vorzugsweise so gewählt wird, daß die mittlere Korngröße zwischen 5 und 10 µm liegt.

Mit dem gesichteten Material wird eine 35 gew.-%ige Dispersion in Isobutanol angerührt.
Die Dispersion wird mit einem Rakel, dessen Spaltbreite 24 µm beträgt, auf ein schwarz lackiertes Blech aufgezogen. Nach dem Trocknen des Dispersionsauftrages wird das Pulver für 5 Minuten bei 280°C eingebrannt. Der Film zeigt eine gelbe Farbe, die bei schrägem Anblick grünstichig blau erscheint. Die cLCP-Schicht ist sehr gut ausgebildet und homogen.
Auf die Schicht wird mit Hilfe eines Nd:YAG-Lasers das Wort 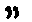 TEST" als Markierung aufgebracht. Durch die Laserbestrahlung pyrolysiert das LCP und die schwarze Untergrundlackierung wird sichtbar. Bei senkrechter Betrachtung erscheint die Effektbeschichtung rotstichig gelb und das Wort 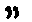 TEST" ist als schwarzer Schriftzug lesbar. Bei schräger Betrachtung erscheint die Effektbeschichtung grünstichig blau und das Wort 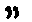 TEST" ist weiterhin als schwarzer Schriftzug lesbar.

## Patentansprüche

1. Verfahren zur Erzeugung einer Markierung auf einer Effektbeschichtung oder Formmasse aus cholesterischen flüssigkristallinen Hauptketten- oder Seitengruppenpolymeren oder aus einer Kombination aus Hauptketten- und Seitengruppenpolymeren, dadurch gekennzeichnet, daß durch Laserbestrahlung eine Farbänderung auf den bestrahlten Stellen der Effektbeschichtung oder Formmasse hervorgerufen wird.

2. Verfahren nach Anspruch 1, dadurch gekennzeichnet, daß die auf einem farbigen Untergrund aufgebrachte Effektbeschichtung mit einem Laser bestrahlt wird, bis an den bestrahlten Stellen die Farbe des Untergrundes sichtbar wird.

3. Verfahren nach Anspruch 1, dadurch gekennzeichnet, daß die Formmasse mit einem Laser bestrahlt wird, bis an den bestrahlten Stellen der Farbeindruck des entsprechenden nicht-orientierten Polymers oder gegebenenfalls eine graue bis schwarze Markierung sichtbar wird.

4. Verfahren nach mindestens einem der Ansprüche 1 bis 3, dadurch gekennzeichnet, daß ein Farbmittel den flüssigkristallinen Polymeren beigemischt wird und die eingefärbte Effektbeschichtung oder Formmasse mit einem Laser bestrahlt wird, bis an der bestrahlten Stelle die Farbe des Farbmittels sichtbar wird.

5. Verfahren nach mindestens einem der Ansprüche 1 bis 4, dadurch gekennzeichnet, daß die cholesterischen flüssigkristallinen Seitengruppenpolymere Polysiloxane, cyclische Siloxane, Polyacrylate oder Polymethacrylate, die mit Cholesterin substituierte Phenylbenzoate oder Biphenole in der Seitenkette als mesogene Gruppe tragen, sind.

6. Verfahren nach mindestens einem der Ansprüche 1 bis 5, dadurch gekennzeichnet, daß die cholesterischen flüssigkristallinen Hauptkettenpolymere Polyester, Polyamide oder Polyesteramide sind, die aromatische und/oder cycloaliphatische Hydroxycarbonsäuren, aromatische Aminocarbonsäuren; und/oder aromatische und/oder cycloaliphatische Dicarbonsäuren, und aromatische und/oder cycloaliphatische Diole und/oder Diamine; sowie chirale, bifunktionelle Comonomere enthalten.

7. Verfahren nach Anspruch 6, dadurch gekennzeichnet, daß das cholesterische flüssigkristalline Hauptkettenpolymer aus
a) 0 bis 99,8 Mol% einer oder mehrerer Verbindungen aus der Gruppe der aromatischen Hydroxycarbonsäuren, cycloaliphatischen Hydroxycarbonsäuren und aromatischen Aminocarbonsäuren;
b) 0 bis 50 Mol% einer oder mehrerer Verbindungen aus der Gruppe der aromatischen Dicarbonsäuren und cycloaliphatischen Dicarbonsäuren;
c) 0 bis 50 Mol% einer oder mehrerer Verbindungen aus der Gruppe der aromatischen und cycloaliphatischen Diole und Diamine;
d) 0,1 bis 40 Mol%, vorzugsweise 1 bis 25 Mol%, an chiralen, bifunktionellen Comonomeren; wobei die Gesamtsumme 100 Mol% ergibt und die Summe aus a), b) und c) 60 bis 99,9 Mol% beträgt, besteht.

8. Verfahren nach mindestens einem der Ansprüche 1 bis 7, dadurch gekennzeichnet, daß die Wellenlänge des Laserlichts zwischen 150 und 1500 nm, vorzugsweise zwischen 150 und 1100 nm, liegt.

9. Verfahren nach mindestens einem der Ansprüche 1 bis 8, dadurch gekennzeichnet, daß die Energiedichte des Laserlichts zwischen 0,3 mJ/cm² und 50 J/cm², vorzugsweise zwischen 1 mJ/cm² und 10 J/cm², beträgt.

10. Verfahren nach mindestens einem der Ansprüche 1 bis 9, dadurch gekennzeichnet, daß die Strahlungsdauer 1 ms bis 30 s beträgt.
